(19) Europäisches Patentamt
European Patent Office
Office européen des brevets

(11) **EP 2 945 062 A1**

(12) **DEMANDE DE BREVET EUROPEEN**

(43) Date de publication:
**18.11.2015 Bulletin 2015/47**

(51) Int Cl.:
***G06F 9/48*** (2006.01)

(21) Numéro de dépôt: **15248011.7**

(22) Date de dépôt: **03.04.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **16.05.2014 FR 1401108**

(71) Demandeur: **THALES**
**92400 Courbevoie (FR)**

(72) Inventeurs:
• **Coulmeau, François**
  **31036 Toulouse (FR)**
• **Castet, Laurent**
  **31036 Toulouse (FR)**
• **Deweerdt, Laurent**
  **31036 Toulouse (FR)**
• **Sanchez, Frédéric**
  **31036 Toulouse (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(54) **PROCÉDÉ D'EXÉCUTION DE SERVICES EN TEMPS RÉEL, NOTAMMENT DE GESTION DE VOL ET SYSTÈME TEMPS RÉEL METTANT EN OEUVRE UN TEL PROCÉDÉ**

(57)    Le système exécute des services par une application dite « serveur » pour au moins une application dite « client ». Une étape préliminaire (40) établit une liste de services du serveur disponibles, paramétrés pour ledit au moins client, étape (40) dans laquelle on détermine un temps de traitement libérable du serveur pour ledit au moins client par cycle d'exécution de code appelé MIF. Le système crée au démarrage :
- (41) NT tâches d'exécution pour ledit au moins client avec chacune un niveau de priorité d'exécution et une durée moyenne d'exécution allouée, NT étant égal ou supérieur à 1, la somme des durées desdites tâches étant inférieure ou égal audit temps de traitement libérable ;
- (42) des règles d'exécution associant chacune desdites tâches à au moins un service de ladite liste ;
puis, lors de chaque cycle MIF (43, 44, 45), le système exécute lesdits services sur leur tâches associées, une tâche étant exécutée en fonction son niveau de priorité et pour une durée au plus égale à sa durée moyenne d'exécution allouée, la partie non exécutée d'un service étant exécutée au cycle suivant sur sa tâche associée.

Printed by Jouve, 75001 PARIS (FR)

**EP 2 945 062 A1**

## Description

La présente invention concerne un procédé d'exécution de services, notamment de gestion de vol, ainsi qu'un système mettant en oeuvre un tel procédé.

L'invention s'applique notamment dans les systèmes embarqués et plus particulièrement dans les systèmes avioniques.

Chaque système avionique temps réel est architecturé et développé pour répondre à des exigences de performances (taux de panne et qualité de service notamment) dans un cadre d'emploi défini. Chaque système, connecté à d'autres systèmes consomme des données et services mis à disposition par les autres systèmes et produit des données de services pour les autres systèmes. Ces interactions sont généralement figées statiquement lors de l'élaboration de l'architecture globale du « système de systèmes », c'est-à-dire lors de l'allocation de fonctions opérationnelles aux systèmes physiques. Ainsi, il est fréquent dans le monde avionique d'avoir plusieurs dizaines de systèmes répondant à l'ensemble des fonctions avion. Typiquement les opérations avion sont allouées aux systèmes selon une structuration logique, définie dans le document normatif de l'association ATA (Air Transport Association). L'architecture avion se décline donc en systèmes avioniques collaboratifs, chacun ayant une fonction bien déterminée, et des interactions avec les autres systèmes pour rendre le service opérationnel attendu. Les différentes fonctions sont réparties sur plusieurs calculateurs physiques, selon des choix des avionneurs, pour garantir les performances des missions.

Les systèmes embarqués sont qualifiés, avec un niveau de performance démontré, pour un environnement donné. Les interactions entre systèmes sont définis a priori lors de l'élaboration de l'architecture avion, et les systèmes sont développés et ajustés pour répondre au strict besoin d'interaction.

Si l'on se place du point de vue « client-serveur » où un ensemble de systèmes dits « clients » effectuent des requêtes vers un système particulier dit « serveur », le travail des industriels qui développent les fonctions allouées au « serveur » est de garantir que les performances finales de celui-ci seront conformes aux performances attendues et cela dans le cadre d'emploi défini a priori.

Dans ce cadre défini a priori, tous les clients sont connus et bien identifiés, aucun nouveau client ne peut interagir avec le système sans requalification de l'ensemble du système.

Un problème majeur est que l'ajout d'un nouveau client à un système donné engendre une requalification très coûteuse. Il faut en effet démontrer à nouveau la tenue de la performance opérationnelle de l'ensemble du système « serveur », même lorsqu'aucun nouveau service n'est attendu par le système « serveur ». Cela bride l'évolution des opérations avion.

Il existe donc un besoin de pouvoir permettre l'ajout de nouvelles connexions et de nouveaux clients à un système temps réel « serveur », en leur garantissant une qualité de service et un temps de réponse qui ne dégrade pas ses performances et ne donne pas lieu à des modifications logicielles ou matérielles du « serveur ». Dans ce cas, l'ajout d'un nouveau client ou d'une nouvelle connexion ne donnerait lieu qu'à une qualification du client en question et à une démonstration prouvant que la performance du réseau reste conforme aux exigences requises.

Un but de l'invention est notamment de répondre à ce besoin. A cet effet l'invention a pour objet un procédé d'exécution temps réel de services par une application dite « serveur » pour au moins une application dite « client », une étape préliminaire établissant une liste de services du serveur disponibles pour ledit au moins client, étape dans laquelle on détermine un temps de traitement libérable du serveur pour ledit au moins client par cycle d'exécution de code appelé MIF, ledit procédé créant au démarrage :

- NT tâches client (Task(i)) pour ledit au moins client avec chacune un niveau de priorité d'exécution (P_task(i)) et une durée moyenne d'exécution allouée (T_task(i)), NT étant égal ou supérieur à 1, la somme des durées desdites tâches étant inférieure ou égal audit temps de traitement libérable ;
- des règles d'exécution associant chacune desdites tâches (Task(i)) à au moins un service (Serv(k)) de ladite liste ;

puis, lors de chaque cycle MIF, ledit procédé exécute lesdits services sur leur tâches associées, une tâche étant exécutée en fonction de son niveau de priorité et pour une durée au plus égale à sa durée moyenne d'exécution allouée (T_task(i)), la partie non exécutée d'un service étant exécutée après les tâches intrinsèques du serveur.

Lors de chaque cycle MIF, lesdites tâches client sont par exemple exécutées après les tâches du serveur de haute priorité et avant les tâches intrinsèques du serveur.

Si le nombre de clients est supérieur à 1, une tâche (Task(1)) supervise par exemple les requêtes asynchrones émises par les clients et déclenche les traitements de services associés sur le serveur, soit sur cette même tâche (Task(1)), soit sur une tâche de priorité différente, en fonction du temps disponible du serveur à l'intérieur d'un cycle MIF.

Dans un mode de mise en oeuvre possible, le procédé détermine la durée maximale nécessaire pour exécuter un service du serveur pour un client sur une tâche associée, connaissant son temps moyen de traitement par cycle, ladite durée maximale étant transmise audit client.

Une durée maximale d'exécution étant imposée, l'exécution d'un service est par exemple acceptée ou refusée en fonction du temps maximal nécessaire pour terminer l'exécution dudit service et de la durée maximale d'exécution imposée, la durée maximale d'exécution imposée pouvant être fournie par le client requérant ledit service. Ladite durée maximale d'exécution imposée est par exemple prédéterminée par configuration du serveur.

La durée moyenne d'exécution allouée par cycle MIF (T_task(i)), est par exemple définie unitairement pour chaque client, quelque soit le service associé. Une tâche (task(i)) est par exemple définie pour chaque service. Une tâche (task(i)) est par exemple définie pour chaque client.

La durée moyenne d'exécution allouée par cycle MIF est par exemple modulable en fonction des besoins propres d'exécution du serveur.

La durée moyenne d'exécution allouée par cycle MIF est par exemple modulable en fonction du temps restant pour que le serveur exécute un service interne, ledit service n'étant pas sur ladite liste, et du temps de réponse attendu pour ledit service.

Le temps de traitement libérable est par exemple égal à $a.T_{Idleopt} - b$, où a est un coefficient compris entre 0 et 1 et b est une durée talon ou marge de temps, $T_{Idleopt}$ étant la durée moyenne du temps libre restant par cycle MIF permettant de tenir les temps de réponse des tâches intrinsèques du serveur avec une probabilité prédéfinie. Dans un mode de mise en oeuvre particulier a = 1 et b = 0.

Lesdits services disponibles sont par exemple avantageusement structurés à l'aide d'une syntaxe abstraite permettant de mettre sous forme de paramètre les données du serveur et lesdits services disponibles.

L'invention a également pour objet un système temps réel mettant en oeuvre le procédé décrit précédemment, comportant au moins un module physique où est implanté le serveur, les clients étant des applications externes implantées dans ledit module physique, lesdits clients communiquant avec le serveur via une mémoire interne au module.

Les clients sont par exemple des applications externes réparties dans d'autres modules physiques et communiquant avec le serveur via un protocole réseau. Le serveur est par exemple une application de gestion de vol, les clients interagissant avec l'application de gestion de vol.

D'autres caractéristiques et avantages de l'invention apparaîtront à l'aide de la description qui suit, faite en regard de dessins annexés qui représentent :

- La figure 1, une présentation de l'architecture fonctionnelle d'un système de gestion de vol embarqué ;
- Les figures 2a et 2b, des caractéristiques de fonctionnement de systèmes temps réel ;
- La figure 3, une illustration du principe de l'invention ;
- La figure 4, différentes étapes possibles pour la mise en oeuvre du procédé selon l'invention ;
- La figure 5, un exemple de détermination de la durée moyenne optimisée du temps restant dans un cycle d'exécution de code ;
- La figure 6, le résultat d'une mesure pour la détermination de la durée moyenne précitée ;
- La figure 7, une loi pour déterminer la probabilité de tenue d'une exigence de fonctionnement ;
- La figure 8, une répartition théorique de la durée moyenne du temps restant sur l'ensemble des cycles d'exécution de code ;
- La figure 9, un exemple de traitement des requêtes entrantes asynchrones émises par les clients ;
- La figure 10, un exemple d'exécution d'une étape du procédé selon l'invention permettant de traiter les tâches intriquées entre tâches clients et tâches serveur ;
- La figure 11, un exemple de représentation physique des clients dans le cas d'application à un système FMS ;
- La figure 12, un exemple de langage appliqué aux services de la famille « gestion de vol ».

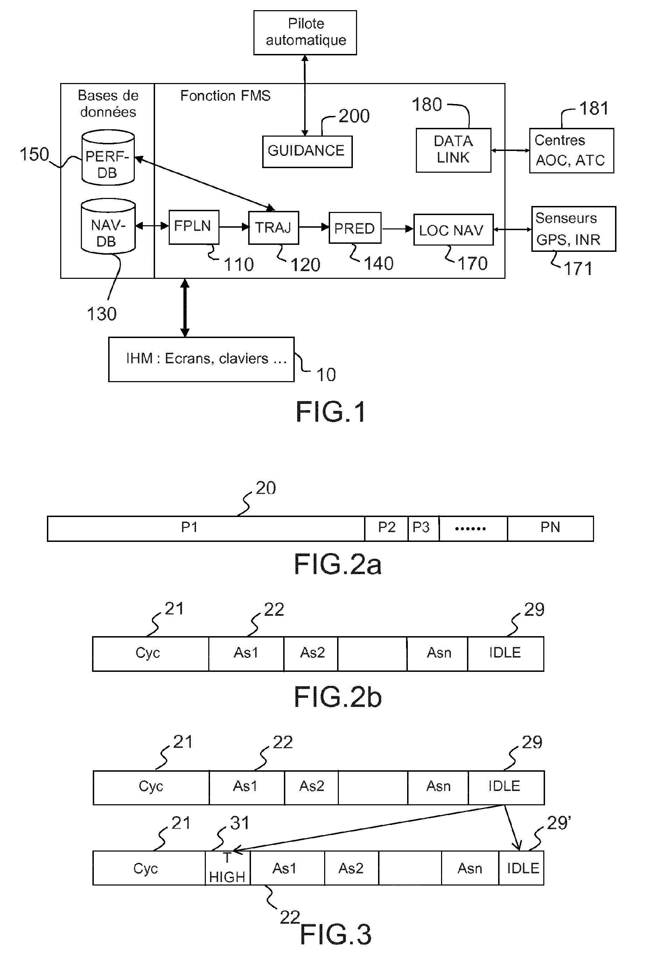

La figure 1 présente l'architecture fonctionnelle d'un système de gestion de vol embarqué, dit FMS (Flight Management System). Cette architecture standard, bien connue, répond à la norme ARINC 702A. Une des fonctions du FMS est de localiser l'avion en utilisant ses senseurs 171 (centrales inertielles, GPS, balises radioélectriques notamment). Cette fonction est réalisée par un module de localisation 170. Le système comporte les fonctions et composants suivants :

- Une fonction de vol FPLN 110, pour saisir les éléments géographiques constituant le squelette de la route à suivre (procédure de départ et d'arrivée, points de passages ...) ;

- Une base de donnée de navigation NAVDB 130, pour construire des routes géographiques et des procédures à partir de données incluses dans les bases (points, balises, legs d'interception ou d'altitude...) ;

- Une base de données de performance, PRF DB 150, contenant les paramètres aérodynamiques et moteurs de l'appareil ;

- Une fonction de trajectoire latérale TRAJ, 120 : pour construire une trajectoire continue à partir des points du plan de vol, respectant les performances avion et les contraintes de confinement (RNP) ;

- Une fonction de prédictions PRED, 140 : pour construire un profil vertical optimisé sur la trajectoire latérale ;

- Une fonction de guidage, GUID 200, pour guider dans les plans latéraux et verticaux l'aéronef sur sa trajectoire 3D, tout en optimisant la vitesse ;

- Liaison de donnée numérique DATALINK, 180 pour communiquer avec les centres de contrôle 181 et les autres aéronefs

A partir des informations géographiques contenues dans la base de données de navigation 130, le pilote peut construire sa route, appelée plan de vol et comportant la liste de points de passage appelés « waypoints », fonction assurée par la fonction de plan de vol 110. Le FMS peut gérer plusieurs plans de vol. L'un d'entre eux, connu sous l'acronyme « Active » dans l'ARINC 702A désigne le plan de vol sur lequel l'avion est guidé. Il existe des plans de vol de travail, parfois appelés « plans de vol secondaires » ou « inactifs », ainsi que des plans de vol transitoires.

La fonction 120 calcule la trajectoire latérale en fonction de la géométrie entre les points de passage, appelés couramment LEG, et/ou les conditions d'altitude et de vitesse qui sont utilisées pour le calcul du rayon de virage. Sur cette trajectoire latérale, le FMS optimise une trajectoire verticale, en altitude et en vitesse, passant par des contraintes éventuelles d'altitude, de vitesse, de temps, en utilisant une modélisation des performances aérodynamiques et moteurs contenues dans la base de données de performances 150.

Connaissant la localisation de l'avion et la trajectoire 3D, le FMS peut asservir l'avion sur cette trajectoire, cet asservissement étant effectué par la fonction de guidage 200. L'ensemble des informations entrées ou calculés par le FMS est regroupé sur des écrans d'affichage ou autre IHM 10. La communication avec le sol, notamment avec la compagnie aérienne et le contrôle aérien, est réalisée par la liaison de données numériques 180. Dans la terminologie FMS, on utilise le terme « révision » pour caractériser une insertion, une modification ou un effacement de données du système FMS, le mot édition étant également utilisé.

Dans les architectures actuelles (quel que soit l'avion), la partie « Flight Planning » et « trajectoire optimisée » est en général incluse dans un calculateur dédié appelé « FMS » pour « Flight Management System » (ou calculateur de gestion du vol). Ces fonctions constituent le coeur de métier FM.

Ce système peut héberger également une partie de la « Localisation » et du « Guidage ».

Afin d'assurer sa mission, le FMS est connecté à de nombreux autres calculateurs (une centaine).

Deux grands clients interagissent habituellement avec le système FMS :

• L'Interface Homme Machine (dite HMI , acronyme anglo saxon de « Human Machine Interface ») qui permet aux opérateurs (équipage) d'interagir avec le FMS
• L'interface CMU (pour Communication Management Unit) qui permet à un opérateur sol (compagnie aérienne, contrôle aérien) d'interagir avec le FMS : Ce calculateur CMU est client des données FMS et peut demander la modification de la mission (i.e. insérer des « révisions » dans le FMS)

Par « interaction » on entend « requête » envoyée au FMS, avec un retour attendu, par opposition à l' « information » qui consiste à ce que des systèmes tiers s'abonnent aux données émises périodiquement ou sur événement par le FMS.

Les opérations futures dans l'avion vont pourtant nécessiter que des systèmes tiers interagissent avec le FMS, soit :

• En utilisant des services publics existants

• En utilisant des services privés existants

• En utilisant de nouveaux services à implémenter dans le FMS.

On peut citer par exemple :

• Initialisation du plan de vol FMS par un calculateur externe (tablette tactile, Ipad, EFB pour « Electronic Flight Bag »)

• Intégration du « plan de vol » du FMS avec le « plan de roulage » du calculateur de roulage sol (appelé ANF pour Airport Navigation Function, AOF pour Airport Onboard Function ou TAXI ou AMM pour Airport Moving MAp)

• Optimisation de la mission, appelée par un client sol (outil compagnie par exemple) ou bord (tablette, EFB) via des requêtes de calcul FMS

- La mise à jour du logiciel FMS (en particulier ses bases de données de Navigation, à cycle de 28 jours) par un équipement tiers (tablette, outil de maintenance, EFB)

- Utilisation de requêtes FMS par un système de surveillance du terrain du trafic, de la météo pour filtrer des alertes, ou les confirmer, ou optimiser des ajustements latéraux et verticaux (ex : évitement d'une masse nuageuse mobile détectée par un Radar Météo)

  o Le système de surveillance trafic est connu sous l'acronyme TCAS (Traffic Collision Avoidance System) ou Traffic Computer

  o Le système de surveillance terrain est connu sous l'acronyme TAWS (Terrain Avoidance Warning System) ou GPWS (Ground Proximity warning system)

  o Le système de surveillance météo est connu sous l'acronyme WxR (Weather Radar)

- Utilisation de requêtes FMS pour aider au déclenchement d'évènements sur un système tiers (ex : Modification de la fréquence radio par le système RMS (Radio Management System) quand on s'approche d'un point de changement de région.

- Vérification de conformité de la trajectoire latérale et/ou verticale calculée par le FMS, par rapport aux cartes aéronautiques numérisées fournies à l'équipage (stockées dans une tablette, un EFB par exemple)

- Utilisation du système FMS pour connaitre des prédictions sur un horizon de temps donné selon des modes de conduite du vol (guidage) et d'état avion définis (ex : Pilote automatique souhaitant connaître le taux de montée moyen sur 2000 pieds d'évolution d'altitude avec 1 moteur en panne ; calculateur de carburant souhaitant comparer la consommation moyenne avec les prédictions FMS de consommation...)

- Interactions avec le FWS (Flight Warning System) pour présenter des résultats de vérifications, proposer des lancements de DO LIST automatisés, modifier directement des états FMS sur confirmation de pannes.

- Passagers connectés via leur interface cabine (IFE pour In Flight Entertainment), souhaitant connaître les prédictions en temps, vitesse pour leur destination.

- Utilisation du FMS via un AID (Agent d'Interaction Domaine) ou une IHS (Interface Homme Système) intégrée qui concentre et organise les échanges entre calculateurs.

Ainsi, une dizaine de nouveaux clients sont susceptibles d'interagir avec le FMS (EFB, WIMS, TCAS, TAWS, WxR, PA, FQMS, IFE), bref la plupart des systèmes des différents ATA. Dans l'avenir, il est possible qu'un nombre encore supérieur de clients souhaite interagir avec la « gestion du vol ».

Or, on ne connaît pas à priori la cadence des requêtes des différents systèmes, ni le moment où la requête sera demandée, ni le volume de données que cela représente.

Si les systèmes tiers souhaitent stocker des résultats de calcul pour une future utilisation, on ne connaît pas a priori le nombre de requêtes de ce type.

Si un nouveau système se connecte, on ne connaît pas a priori ses intentions (type de requêtes, périodicité)

Le procédé selon l'invention, décrit par la suite, en rendant l'architecture du système plus ouverte permet l'ajout de ces nouveaux clients avec un nombre inconnu de requêtes arrivant à des instants aléatoires, et cela tout en garantissant les performances intrinsèques du système.

L'invention est décrite pour un système avionique, mais elle applicable à toute architecture de systèmes temps réel embarqués.

Les figures 2a et 2b présentent des caractéristiques de fonctionnement de ces systèmes. La figure 2a présente une trame exécutée par chaque processeur d'un calculateur, cette trame étant connue sous le terme de MIF selon l'expression anglo-saxonne « Minor Frame ». Plus particulièrement, chaque processeur exécute son code sur des créneaux temporels successifs, ces créneaux étant des MIF. Chaque MIF est découpée de manière statique ou dynamique, suivant les technologies, en partitions temporelles, c'est-à-dire en créneaux temporels 20 sur lesquels une fonction s'exécute. Dans l'exemple de la figure 2a, la MIF comporte N créneaux P1, P2, P3 ... PN.

Cette technologie est largement déployée sur les modules dits IMA (pour « Integrated Modular Avionics ») en aéronautique. Elle permet d'héberger sur un même calculateur physique plusieurs fonctions entraînant des gains en masse et en puissance électrique.

Dans la plupart des systèmes temps réels embarqués, le partitionnement est statique afin d'assurer le déterminisme des temps de réponse globaux du système. De la même manière, les modules IMA allouent, de manière statique en général, les mémoires physiques RAM et ROM qu'utilisera chaque fonction. Cela permet de bien ségréguer les différentes fonctions qui s'exécutent au sein d'un même module et de mieux maîtriser les problèmes de pannes.

La figure 2b illustre l'exécution temps réel d'une fonction temps réel au niveau d'une partition d'une MIF. La figure 2b représente une succession de traitements 22 classés par priorités, le traitement As2 pouvant s'exécuter avant le traitement As1 mais pouvant être interrompu par As1 qui prend la main car sa priorité est plus élevée, et de même pour Asi-1 par rapport à Asi. En général, le système commence par exécuter les traitements 21 dits « cycliques » de la fonction. Il s'agit de traitement qui doivent s'exécuter à chaque MIF sans être interrompus, ces traitements concernant notamment des gestions d'entrée et de sorties ou encore le calcul d'informations qui doivent être rafraîchis à chaque cycle. Ces traitements ont une priorité plus élevée car il faut garantir qu'ils auront le temps de s'exécuter tout le temps. Ce sont en fait des tâches comme les autres, mais auxquelles on a en général associé une priorité élevée pour garantir qu'ils passent avant les autres traitements.

Après le traitement cyclique 21, viennent les traitements asynchrones 22. En temps réel, il s'agit de traitements qui s'exécutent sur requête (événements, réveil périodique ...). Les événements sont en général générés par les systèmes périphériques connectés au système principal. Ils sont ordonnés par priorité de traitement. Ainsi sur la figure 2b, on visualise une succession de traitements asynchrones 22, l'événement As1 étant suivi de l'événement As2, lequel est suivi de l'événement As3 et ainsi de suite jusqu'au dernier événement Asn. Si on note P(Asi) la priorité d'un événement, il vient :

$$P(As1) > P(As2) > P(As3) > \ldots P(Asn).$$

Si le premier traitement As1 nécessite tout le temps de calcul restant sur la MIF, les autres traitements ne pourront s'exécuter au mieux que sur la MIF suivante. Si la somme des traitements cyclique 21 et asynchrones 22 devant s'exécuter ne dépasse pas la durée de la MIF, il reste du temps libre 29 que l'on appelle IDLE.

Les temps de réponse perçus par l'extérieur du système, c'est-à-dire perçus par les systèmes périphériques ou par l'humain, pour un traitement global donné, sont donc proportionnels au nombre de MIF nécessaires pour exécuter la totalité du traitement. Ainsi sur une MIF de 80 ms où le traitement cyclique prend 30 ms, si un traitement nécessite 1 seconde de temps processeur pour exécuter son calcul, il faudra au mieux 20 MIF pour le terminer, 20 MIF correspondant à 20 x 50 ms = 1 seconde où 50 ms est le temps restant dans une MIF après le traitement cyclique de 30 ms. Le temps de réponse sera donc de 20 x 80 ms = 1,6 seconde. Si le traitement entre en concurrence avec d'autres traitements asynchrones plus prioritaires que lui, le nombre de MIF nécessaire augmente et donc le temps de réponse perçu par l'extérieur.

Cela montre notamment que toute la difficulté pour les industriels du domaine pour bâtir une architecture temps réel est d'ordonnancer les traitements sur des tâches de priorités adaptées pour tenir l'ensemble des temps de réponses des traitements exigés, en prenant en compte la concurrence des traitements avec une probabilité de tenue respectée. En général, les systèmes doivent garantir qu'ils tiennent leurs exigences de performance 100% du temps, en « mono-événement », c'est-à-dire sans superposition d'événements concurrents. Et on mesure la probabilité que cela ne soit plus le cas en « multi-événements » concurrents, cette probabilité devant être la plus faible possible. On peut ainsi exiger que le système soit dimensionné pour tenir l'ensemble des temps de réponse dans 99% du temps. Cette probabilité peut également être différente entre les traitements selon leur criticité, c'est-à-dire selon leur impact sur la tenue de l'opération globalement.

Lorsque l'on connaît le nombre de clients pouvant demander un traitement asynchrone, la fréquence maximum de leurs requêtes et la durée CPU de calcul correspondant au traitement des requêtes par le serveur, il existe des techniques connues de l'état de l'art pour créer et ordonnancer les tâches temps réel d'une ressource donnée, afin de répondre à ces exigences de temps de réponse avec la probabilité requise.

L'invention utilise avantageusement un mécanisme de tâches à priorité dynamique comme décrit ci-dessus, en utilisant le temps libre moyen mesuré, c'est-à-dire le temps moyen des « IDLE ».

Il faut bien sûr que ce temps libre 29 existe, c'est-à-dire que le système ne soit pas dimensionné au plus juste, mais avec de la marge. C'est en pratique le cas pour la plupart des systèmes temps réel car les exigences de performances à atteindre sont difficilement mesurables a priori, les performances intrinsèques d'un système étant difficilement mesurables a priori. Il s'ensuit que les systèmes sont en pratique un peu surdimensionnés pour prendre en compte les aléas et les risques.

Cette marge correspond au temps moyen restant 29, c'est-à-dire à la durée moyenne de l'IDLE, quand on effectue des mesures de performances du système sur un large spectre de scénarios de charge de calcul.

Ce temps moyen restant peut être :

- Mesuré par des campagnes de tests, pour des pires cas de superposition d'événements ou par des tests aléatoires massifs utilisant les techniques de Monte-Carlo, d'autres types de tests étant possibles ;
- Quantifié par des modélisations conformes du point de vue Temps réel, les outils de MBDE (Model Based Driven Engeering) proposant parfois des fonctions de calcul de performances ;
- Mesurés par retour d'essais en fonctionnement opérationnel.

On peut ainsi déterminer, connaissant le système dans son domaine d'usage, avec son nombre de clients déterminé, les variables M(IDLE) et P(IDLE) correspondant respectivement à la moyenne et à la variance de la durée de la tâche IDLE, c'est-à-dire du temps restant 29.

La figure 3 illustre le principe de l'invention. Selon l'invention on détermine une durée moyenne optimisée de l'IDLE 29 dite $T_{IdleOpt}$ dont la valeur permet de tenir les temps de réponse avec la probabilité requise. Le système alloue alors aux clients externes un créneau temporel sur une nouvelle tâche de priorité haute 31 dont la durée n'excède pas la durée $T_{IdleOpt}$ sur une ressource donnée. Le nouveau temps restant 29' devient inférieur au temps restant 29 sans introduction de cette tâche 31, voire nul.

Un client externe est un client non prévu lors de l'élaboration de l'architecture, c'est-à-dire un client nouveau, non connu a priori.

L'invention permet ainsi, connaissant cette durée $T_{IdleOpt}$, et connaissant la durée moyenne CPU d'un traitement unitaire 21, 22 parmi les services proposés, et l'état de la pile de requêtes en cours de traitement et d'attente, d'estimer l'échéance à laquelle le serveur pourra répondre au client. Cela permet notamment d'avoir des stratégies de refus et de prise en compte des requêtes selon les échéances demandées par les clients.

Des variantes de mise en oeuvre sont possibles, en particulier :

- Plutôt qu'une seule tâche, N tâches peuvent être créées, N étant alors supérieur à 1, avec des priorités et des temps d'exécution différentes, pour répartir les services dont le temps de calcul ou l'importance diffèrent. Ces N tâches sont exécutées après le traitement cyclique 21, par exemple entre ce traitement cyclique et le premier traitement asynchrone As1 (la figure 3 illustre le cas où N=1) ;
- Les N tâches peuvent être réparties sur plusieurs ressources, c'est-à-dire sur plusieurs instances d'exécution du système serveur, typiquement dans le cas de systèmes redondés. Un système de supervision doit être mis en place pour allouer les requêtes clients sur les différentes instances physiques afin d'optimiser la charge globale.

Il est à noter qu'en terme d'implémentation, dans un système embarqué avionique, la norme ARINC 653, une tâche temps réel peut être exécutée en partie avec une priorité donnée et en partie avec une autre priorité, la norme permettant en effet d'affecter une tâche selon une priorité de base (« base priority ») et une priorité courante (« current priority »). D'autres types d'implémentations sont bien sûr possibles, en particulier dans des domaines non avioniques.

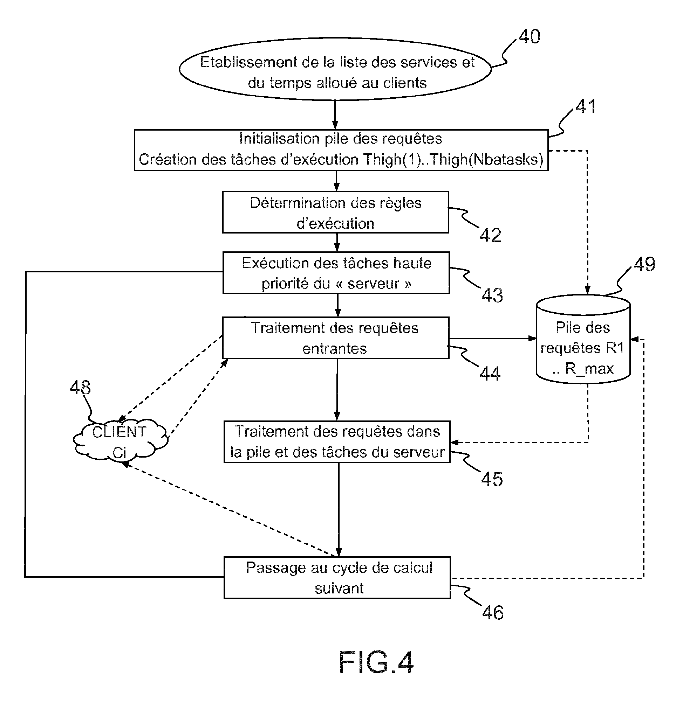

La figure 4 présente différentes étapes possibles pour la mise en oeuvre du procédé selon l'invention. Le procédé comporte une étape d'initialisation 40. Cette étape est réalisée une seule fois. Le but de cette étape d'initialisation est de déterminer le temps libre moyen optimisé $T_{IdleOpt}$ qui sera utilisé par les autres étapes du procédé. Dans cette étape d'initialisation 40, on crée une tâche de priorité élevée, de durée donnée, et on mesure son impact sur la tenue des exigences de performances intrinsèques. Plusieurs solutions sont possibles pour déterminer cette durée.

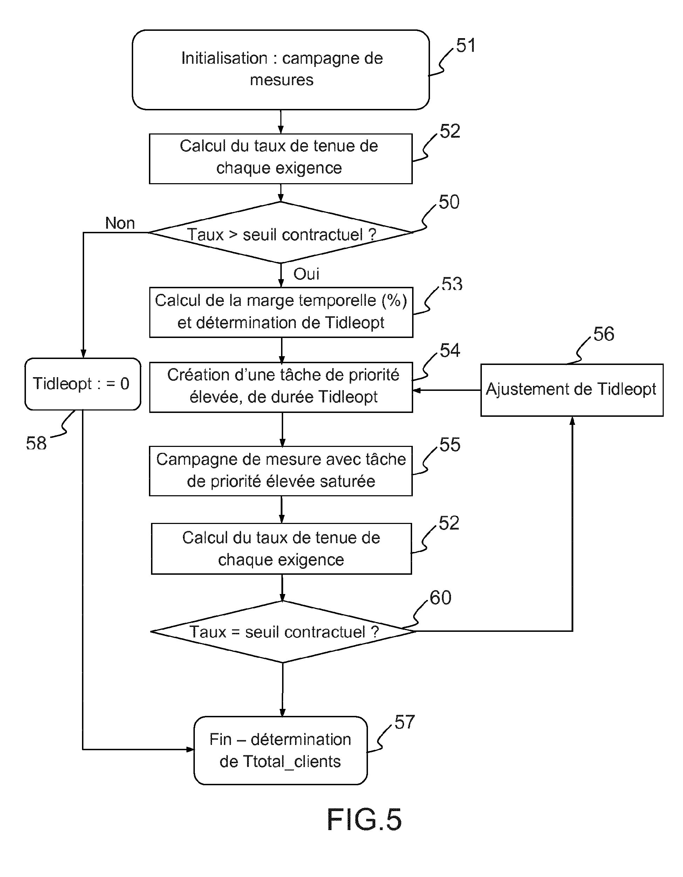

La figure 5 illustre un exemple de détermination du temps $T_{IdleOpt}$. La durée recherchée est obtenue par un calcul itératif dont les étapes sont présentées en figure 5.

Une première étape 51 consiste à effectuer une campagne de mesures des temps de réponse intrinsèques du système, sur un jeu de scénarios représentatifs, ou par modélisation des performances du système serveur. Dans cette étape d'initialisation du calcul, on ne crée pas de tâche de haute priorité. On dispose en entrée des chaînes de traitements sur lesquelles portent des exigences contractuelles. Ces exigences, au nombre de NB_contract, sont caractérisées par :

- Une chaîne de traitement {E(i), S(i)} entre 1 événement déclencheur E(i) et une sortie attendue S(i)
- Une exigence de temps de réponse T_contract(i)
- Une probabilité de tenue de cette exigence P_contract(i).

Cette campagne mesure :

- les temps de réponse de bout en bout d'une chaîne de traitements (dite chaîne fonctionnelle), sur laquelle porte une exigence de performance contractuelle,
- Le temps total de l'IDLE restant entre la fin du traitement et l'échéance du contrat T_contract(i).

Ainsi, pour chaque chaîne {E(i), S(i)} (i = 1 .. NB_contract), on dispose de N_mes(i) mesures et/ou essais fonctionnement opérationnel et/ou modélisations. Pour chaque mesure j (j allant de 1 à N_mes(i)), d'un traitement d'une chaîne {E(i), S(i)}, on note le temps de réponse obtenu « T_mes(i,j) », correspondant à la durée entre le début et la fin du traitement, et le temps total de l'IDLE « T_IDLE(i,j) ».

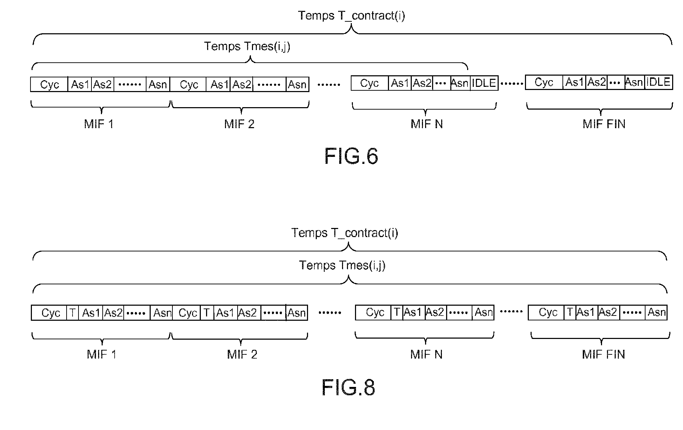

Les tâches asynchrones du serveur utilisent tout le temps disponible possible par MIF, jusqu'à terminer le traitement comme le montre la figure 6 qui présente le résultat d'une mesure j sur une chaine {(E(i), S(i)}. La N$^{ième}$ et dernière MIF, notée MIF N, correspondant à la fin du traitement dispose donc d'un peu d'IDLE, les précédentes étant pleines.

Chaque MIF ayant une durée T_MIF allouée aux traitements asynchrones (i.e. en retranchant la durée prise par les cycliques), on connaît pour chaque mesure j de la chaîne i :

- Le nombre de MIF N_MIF(i,j) pour exécuter le traitement est défini par N_MIF(i,j) = T_mes(i,j) / T_MIF, arrondi à l'entier supérieur.

On connaît également le nombre de MIF correspondant au temps de réponse attendu :
-

$$N\_MIF\_contract(i) = T\_contract(i) / T\_MIF$$

L'étape suivante 52 compare le taux de tenue des exigences de performances intrinsèques, par rapport aux engagements contractuels. Dans cette étape, il s'agit de vérifier la distribution statistique des échantillons mesurés, par rapport à l'exigence associée. De nombreuses techniques existent. Pour un système temps réel, où le passage dans les chaînes de traitement sera très important au cours de la vie du système, on peut utiliser les propriétés de la loi des grands nombres pour estimer la loi statistique suivie par chaque chaîne de traitement. Pour cela, le procédé calcule la durée moyenne et l'écart type des mesures de la première étape 51, pour chaque chaîne de traitement de la campagne de mesure, et détermine le pourcentage d'exigences tenues :

Pour tout i allant de 1 à NB_contract, on calcule :

- Durée moyenne pour une chaîne {E(i), S(i)} : $Tmoy(i) = \frac{1}{N\_mes(i)} \sum_{j=1}^{N\_mes(i)} T\_mes(i,j)$

- Ecart type sur la durée, pour une chaîne {E(i), S(i)} :

$$\sigma(i) = \sqrt{\frac{1}{N\_mes(i)} \sum_{j=1}^{N\_mes(i)} (T_{mes(i,j)} - Tmoy(i))^2}$$

- La durée moyenne de l'IDLE disponible :

$$Tmoy\_IDLE(i) = \frac{1}{N\_mes(i)} \sum_{j=1}^{N\_mes(i)} T\_IDLE(i,j)$$

Si le nombre de mesure est suffisamment grand, La loi des grands nombre peut être utilisée.

Elle permet d'affirmer que la distribution des mesures N_mes(i) converge en probabilité vers une loi.

Si les tirages aléatoires sont de type Monte-Carlo, c'est-à-dire si les tirages où les variables aléatoires en entrée sont indépendantes et identiquement distribuées, le « théorème centrale limite » montre que la distribution des tirages est caractéristiques d'une loi particulière, une « loi normale », de paramètres Tmoy(i) et σ(i).

Ces mêmes techniques de Monte-Carlo permettent de déterminer la taille minimale de l'échantillon « N_mes_min(i) » de mesures, assurant que l'erreur e(i) entre les paramètres estimés Tmoy(i) et σ(i)., et la réalité Trep(i) et $\sigma rep(i)$ est inférieure à un seuil de probabilité Seuil(i) :

- Le seuil Seuil(i) suit les quantiles de la loi normale réduite ; ainsi pour

  ◦ Seuil(i) = 32%, q = 1 (1 σ correspond à 68% de la loi normale)

◦ Seuil(i) = 5%, q=1,96 (1,96 $\sigma$ correspond à 95% de la loi normale)

◦ Seuil(i) = 0,3%, q= 3 (3 $\sigma$ correspond à 99,7% de la loi normale)

• On a : $e(i) \leq \dfrac{q\,\sigma(i)}{\sqrt{N\_mes\_min(i)}}$

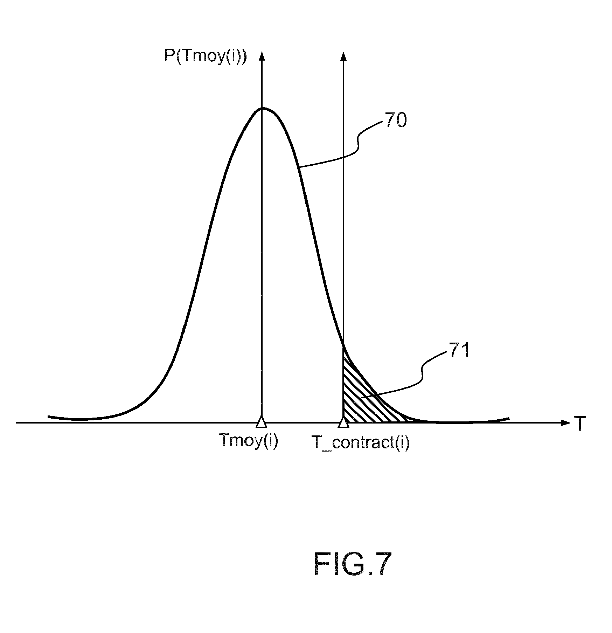

En traçant la loi normale Tmoy(i) et $\sigma(i)$ telle qu'illustrée par la figure 7, on peut déterminer la probabilité de tenue de l'exigence P_mes(i), il s'agit du demi quantile supérieur au temps T_contract(i). La probabilité de non tenue correspond à l'aire 71 située à droite du temps de réponse T_contract(i). La probabilité de tenue P_mes(i) est égale à l'aire à gauche de T_contract(i).

Une branche 50 du procédé vérifie l'ensemble des exigences de performances. Pour i allant de 1 à NB_contract, on vérifie la condition P_mes(i) > P_contract(i). La condition est remplie si l'ensemble des conditions unitaires est remplie. Dans ce cas, on passe à l'étape suivante 53 du procédé.

Si la condition n'est pas remplie alors que $T_{Idleopt}$ = 0, il n'y a pas de marge possible pour la tâche de priorité élevée. C'est la fin du procédé.

La troisième étape effectue le calcul de la marge temporelle et détermine la durée $T_{Idleopt}$. Puisque la probabilité de tenue des exigences est supérieure aux exigences contractuelles, les moyennes de l'IDLE restant pour chaque chaîne *Tmoy_IDLE(i)* sont positives. Elles correspondent au temps non utilisé, permettant de satisfaire l'exigence de temps de réponse T_contract(i).

L'« IDLE » que l'on peut libérer pour la chaîne {E(i),S(i)} par MIF, vaut donc le temps moyen de l'IDLE pour cette chaîne, réparti sur le nombre de MIF du contrat d'exigence de cette chaîne :

•

$$T_{Idle_{Opt}}(i) = \frac{Tmoy_{IDLE(i)}}{\text{N\_MIF\_contract}(i)}$$

Si on bloque ce temps sur chaque MIF, alors pour la chaîne {E(i),S(i)}, on a théoriquement la répartition de Tmoy_IDLE(i) sur l'ensemble des MIF telle qu'illustrée par la figure 8, avec la mesure j théorique obtenue sur une chaîne {E(i),S(i)}. Dans cette figure, on a utilisé tout l'IDLE disponible pour placer des nouvelles tâches 31 de priorité haute. Le temps de traitement se rapproche donc du temps contractuel, et cela va donc par ricochet augmenter la probabilité de non tenue des exigences de performances. Compte tenu des incidences d'une mesure sur les résultats moyens observés pour d'autres chaînes, il va falloir boucler les étapes de la figure 5 jusqu'à converger sur des durées optimales.

La quatrième étape 54 effectue une campagne de mesures avec tâche de priorité élevée saturée. Plus précisément, dans un mode de réalisation, on ne crée qu'une tâche de priorité élevée. La durée de cette tâche ne pourra donc excéder le plus petit temps libérable possible, c'est à dire le temps correspondant à la chaîne la plus contrainte :

•  $T_{Idle_{Opt}} = \min_{i \in [1;NB_{contract}]} T_{Idle_{Opt}}(i)$

Ce mode de réalisation peut être un peu trop contraignant, si les valeurs libérables sont très petites pour une chaîne donnée et plus grande pour les autres. Avantageusement, le procédé crée « NT » Tâches Task(1),... Task(NT), et regroupe les traitements {E(i),S(i)} par durée d' IDLE libérable homogène :

• Soit $T_{Idle_{Optmin}} = \min_{i \in [1;NB_{contract}]} T_{Idle_{opt}}(i)$
  et $T_{Idle_{Opt}max} = max_{i \in [1;NB_{contract}]} T_{Idle_{opt}}(i)$

• On note $\Delta T = (T_{Idle_{Opt}max} - T_{Idle_{Optmin}})/NT$

• Task(1) rassemble les traitements {E(k),S(k)} pour k allant de 1 à Nb_contract tels que la durée moyenne libérable $T_{Idle_{Opt}}(k)$ est comprise entre $[T_{Idle_{Optmin}}; T_{Idle_{Optmin}} + \Delta T]$

• Task(i) : rassemble les traitements {E(k),S(k)} pour k allant de 1 à Nb_contract tels que la durée moyenne libérable $T_{Idle_{Opt}}(k)$ est comprise entre $[T_{Idle_{Optmin}} + (i - 1) * \Delta T; T_{Idle_{Optmin}} + i * \Delta T]$

• Task(NT) : rassemble les traitements {E(k),S(k)} pour k allant de 1 à Nb_contract tels que la durée moyenne libérable $T_{Idle_{Opt}}(k)$ est comprise entre $[T_{Idle_{Optmin}} + (NT - 1) * \Delta T; T_{Idle_{Optmin}} + NT * \Delta T]$

Tout autre découpage peut être effectué pour regrouper des traitements, sans que cela ne modifie le caractère inventif du procédé.

L'étape suivante 55 effectue une campagne de mesure identique au niveau des scénarios joués à l'étape 51, mais en bloquant pour chaque MIF un temps de traitement par chaîne {E(i),S(i)} égale au $T_{IdleOpt}$ associé au traitement.

On relance la deuxième étape 52 pour effectuer alors les mesures sur les temps de réponse obtenus dans cette cinquième étape 55.

La deuxième branche 60 du procédé suivant la deuxième étape 52 relancée consiste à vérifier la probabilité de tenue des temps de réponse par des calculs identiques à la première branche 50. Pour i allant de 1 à NB_contract, on vérifie la condition P_mes(i) = P_contract(i) à une tolérance près (1 % par exemple). La condition est remplie si l'ensemble des conditions unitaires est remplie. Dans ce cas, on passe à une étape de fin 57 que l'on décrira par la suite. Dans le cas contraire, si on n'a pas réussi à vérifier toutes les conditions de la branche, on passe à une étape suivante 56. Cette dernière ajuste les valeurs moyennes en fonction des résultats obtenus.

Deux cas se présentent pour chaque traitement {E(i), S(i)} :

- Cas 1 : Il reste de la marge disponible pour le traitement. On augmente légèrement les marges IDLE pour la chaîne en question :

$T_{IdleOpt}(i) := k * T_{IdleOpt}(i)$, avec k légèrement supérieur à 1 (par exemple 1,1)

- Cas 2 : Il manque du temps pour le traitement. On diminue légèrement les marges IDLE pour la chaîne en question :

$T_{IdleOpt}(i) := k*T_{IdleOpt}(i)$, avec k légèrement inférieur à 1 (par exemple 0,9)

L'étape 56 reboucle alors sur la quatrième étape 54 qui va reclasser les chaînes dans la ou les tâches définies. Les étapes 54, 55, 52, la deuxième branche 60 et l'étape 56 sont réitérées tant que les conditions de la branche 60 ne sont pas remplies.

La dernière étape 57 détermine le temps total minimum alloué aux clients « Ttotal$_{clients}$ » par cycle de calcul d'une MIF de durée T_mif. « Ttotal$_{clients}$ » représente le temps de traitement libérable du serveur pour les tâches 31.

Si les $T_{IdleOpt}$ sont non nuls, c'est-à-dire si on a de la marge pour les traitements :

$$\bullet \quad Ttotal_{clients} = a\, T_{Idle_{Opt}} - b$$

« a » est un pourcentage (compris entre 0 et 100%), et « b » est une durée talon. Cela garantit que

$$\bullet \quad Ttotal_{clients} \leq T_{Idle_{Opt}}$$

Les valeurs « a » et « b » sont calculées pour ajuster la marge, si nécessaire. Le procédé borne *Ttotal$_{clients}$* de sorte que :

$$\bullet \quad Ttotal_{clients} \geq T_{min}, \text{(temps minimum alloué aux clients)}$$

Dans un mode de réalisation préféré, généreux pour le client :

$$\bullet \quad a = 1 \text{ (i.e. 100\%) et b} = 0, \text{et} T_{min} = T_{Idle_{Opt}}$$

Dans une alternative, minimaliste pour le client, on peut envisager des valeurs comme :

$$\bullet \quad a = 0,75 \text{ (i.e. 75\%) et b} = 10\% \text{ de T\_mif, et} T_{min} = 1\%\, T_{mif}$$

Dans une alternative dynamique pour le client, on peut envisager des valeurs fonction de la charge estimée à court terme du « serveur » :

$$a = f(T_{Idle_{Opt}}, \text{charge}) \text{ et } b = g(Tmif, \text{charge}) , \text{et} T_{min} = h(Tmif)$$

En effet, pour la plupart des systèmes temps réels, on sait déterminer de manière sûre l'enchaînement des fonctions intrinsèques au système, liées à un événement. On peut également classer les événements en deux types :

    o événement prédictible : le système surveille des paramètres déclencheurs d'un événement. Il sait temporellement estimer la survenue de l'événement en question (typiquement pour un FMS, le système sait pertinemment estimer la survenue d'une séquence d'un point en distance, altitude, temps)

    o événement non prédictible : il s'agit en général du réveil du « serveur » par un système externe, ou un timeout échu, ou par une interaction pilote. Le système ne sait pas prédire la survenue de l'événement, mais sait au moins estimer la charge calcul associée.

Le procédé peut donc effectuer une allocation dynamique des valeurs d'ajustement du temps disponible selon une règle du type :

| Type d'événement | Temps CPU nécessaire pour traiter l'événement | Temps alloué aux clients |
|---|---|---|
| Prédictible, échéance à X ms (millisecondes) | Y ms | Mode intermédiaire : « mode généreux » sur X ms puis « mode minimaliste » pendant le temps de réponse pour traiter les Y ms sur ce mode, puis « mode généreux » |
| Non prédictible | Y ms | « mode minimaliste pour le client » |
| Absence d'événement connu | 0 ms | « mode généreux pour le client » |

Ainsi, lorsque le FMS estime un pic de charge intrinsèque à venir, il peut temporairement diminuer le créneau temporel de haute priorité alloué aux clients, puisqu'il sait qu'il aura besoin de consommer pour ses besoins intrinsèques plus d' IDLE.

A la suite du temps alloué aux clients, on détermine dans l'étape d'initialisation 40 la liste des services disponibles pour les clients. La liste comporte des services génériques, par exemple des services de consultations et des services de modification, et des services métiers qui dépendent de l'application du serveur temps réel. Des exemples de services métier ont été donnés précédemment pour un dispositif de gestion du vol. Selon l'invention, afin de réduire encore plus risque de devoir modifier le serveur et le requalifier, la liste des services qu'il propose est rendue le plus possible indépendante du métier d'application, en particulier par :

- l'utilisation d'une syntaxe générique pour les services, indépendante de la fonction exécutée ;

- l'utilisation de paramètres, de listes, pour définir la fonction métier ;

- l'utilisation de listes non bornées ou de taille suffisante, pour les paramètres, afin de ne pas modifier la structure d'appel du service, même lorsque le serveur s'enrichit de nouvelles fonctions ou de nouveaux paramètres ;

- l'utilisation d'un langage, neutre, basé sur la physique (grandeurs classiques de position, vitesse, accélération, masse, temps notamment en ce qui concerne le domaine avionique par exemple), pour avoir une interface la plus générique possible.

On effectue ainsi une modélisation abstraite de l'interface entre le serveur et les clients, appelée « interface serveur ». L'interface est standard, c'est-à-dire qu'elle ne fournit pas de services pour un client. Un nouveau client qui arrive doit se conformer à cette interface.

Chaque service de la liste est « abstrait » et caractérisé par exemple par :

• Sa famille d'appartenance

- une liste de paramètres

- option : un niveau de priorité requis

- option : une précision requise

- option : une classe de temps de traitement.

Les paramètres sont spécifiés lors de l'appel par les clients de ceux qui sont définis statiquement par « interface serveur ».

On dispose en sortie de cette étape d'initialisation 40 d'une table de NB_Serv services.

Par la suite, chaque service s'appellera « Serv(i) » pour i = 1 à NB_Serv.

Pour chaque service, la table contient :

- Le temps CPU de traitement (non publié dans l « interface serveur »)
- Le temps de réponse « garanti » (publié dans l'« interface serveur »).

On revient à la figure 4. Une fois l'étape d'initialisation effectuée, le procédé exécute les étapes suivantes, l'étape d'initialisation n'étant plus exécutée pour les opérations ultérieures, les services et le temps $T_{IdleOpt}$ alloué ayant été définis. L'étape d'initialisation pourrait à nouveau être mise en oeuvre en cas d'évolution de certains paramètres.

La première étape 41 effectue l'initialisation de la pile des requêtes 49 et la création des tâches d'exécution 31. La pile des requêtes 49 est initialisée à 0. Dans cette étape, le procédé crée des structures « TASKS » caractérisée par un nombre NT de tâches d'exécution, chaque tâche i, pour i allant de 1 à NT, étant caractérise par au moins :

- Un identifiant task(i) ;

- Un niveau de priorité P_task(i) ;

- Une durée T_task(i).

Il s'agit des tâches optimisées selon l'étape d'initialisation 40. Le cas NT = 1 correspond à l'illustration de la tâche 31 de la figure 3 .

Le « serveur » comporte déjà sa liste de tâches Server_Tasks(i), ordonnées par leurs priorités P_Server_Tasks(i) pour i allant de 1 à NB_Server_Tasks. Typiquement les tâches les plus prioritaires correspondent aux tâches ou traitements cycliques 21 et la tâche la moins prioritaire est la tâche Server_Tasks(NB_Server_Tasks) correspondant à l'IDLE 29.

Les niveaux de priorité servent à ordonnancer l'exécution des tâches :

- P_Task(i) <> Ptask(j) $\forall$ i <> j, (i,j) $\in$ (1 .. NT)x(1 .. NT)

- P_Task(i) <> P_Server_Tasks(j),
  $\forall$ (i,j) $\in$ (1 .. NT)x(1 .. NB_Server_Tasks)

Les tâches allouées pour le client peuvent être intriquées dans les tâches du « serveur », ou regroupées. Dans une optique d'implémentation utilisant la norme ARINC 653 et sa fonction de modification dynamique de priorité de tâche, il est préférable qu'elles soient regroupées pour maîtriser le temps réel.

La durée T_Task de chaque tâche « Task(i) » est ajustée de sorte que :

$$\bullet \quad \sum_{i=1}^{NB\_Tasks} T\_Tasks(Task(i)) = T_{total_{clients}}$$

- Dans le cas de durées dynamiques, il faut s'assurer que chaque tâche élémentaire ait une durée minimale Tmin.

Cette durée ne pourra être supérieure à $T_{total_{clients}}/NT$ tout en vérifiant $\sum_{i=1}^{NB\_Tasks} Tmin(i) \leq T_{total_{clients}}$

Dans une alternative spécifique aux ressources redondées, correspondant à un cas où il y a plus d'une instance physique du « serveur », la structure « TASKS » créée par le procédé peut être répartie sur les différentes ressources physiques, les différentes ressources se partageant alors les NT tâches.

Dans une autre alternative, le procédé crée autant d'instance « TASKS » que de ressources, il y a alors NT tâches par ressource.

Dans une troisième alternative, le procédé crée un nombre de tâches par ressources intermédiaire entre les deux alternatives ci-dessus tel qu'illustré par l'exemple défini par le tableau suivant où chaque ressource dispose d'un nombre de tâches entre 1 et NT :

| Tâche | Ressource 1 | Ressource 2 | ... | Ressource i | ... | Ressource NR |
|---|---|---|---|---|---|---|
| Task(1) | X | X | | | | |
| Task(2) | | X | | X | | X |
| ... | X | | | | | |
| Task(i) | | X | | | | X |
| ... | | | | X | X | |
| Task(NT) | X | | X | | X | X |

La deuxième étape 42 effectue la détermination des règles d'exécution des tâches. Cette étape associe :

• les « tâches d'exécution »

• les services disponibles, en créant des règles.

On dispose en sortie de tables pour l'allocation des services sur les tâches, par exemple selon la table suivante :

| Tâche | Service s'exécutant sur la tâche |
|---|---|
| Task(1) | Serv(i), Serv(j) ... |
| ... | |
| Task(i) | Serv(k), Serv(n) ... |
| ... | |
| Task(NT) | Serv(p), Serv(q), ... |

On peut par exemple affecter les services aux tâches par leur durée de traitement, tels que définis dans l'étape d'initialisation 40, c'est-à-dire mettre les services les plus consommateurs sur une tâche à laquelle on allouera un temps d'exécution plus conséquent, et les services unitaires sur une tâche de moindre durée.

On peut également affecter les services aux tâches par nature (modification, consultation), ou par priorité.

Dans une alternative, on peut allouer des tâches aux clients, en fonction de leur priorité comme illustré par la table suivante :

| Tâche | client s'exécutant sur la tâche |
|---|---|
| Task(1) | Client_x |
| ... | ... |
| Task(i) | Client_y |
| ... | ... |
| Task(NT) | Client_z |

En revanche, étant donné que l'on ne connaît pas a priori le nombre de clients qui se connectent, ni leur nature, le procédé comporte :

- Soit une table de configuration statique, permettant au démarrage d'allouer les clients sur les tâches par leur port physique (c'est-à-dire par leur interface physique ou logique : notion de « Virtual Link » en aéronautique qui définit le câblage entre systèmes)

- Soit un ajout dans la signature des appels, qui permette à une tâche d'ordonnancement de les affecter à une tâche client. Un client nouveau peut alors se déclarer avec un profil type (fréquence d'appels, types de services demandés ...).

Le procédé, dans une implémentation préférée, peut dans tous les cas cités ci-dessus définir la Task(1) (la plus prioritaire des tâches clients) comme étant l'ordonnanceur des requêtes qui arrivent au « serveur », c'est-à-dire de les placer dans la pile des requêtes 49 avec la bonne allocation de tâche sur laquelle elle s'exécutera. Elle aura du coup la priorité la plus élevée de l'ensemble desTask(i).

Le procédé peut alternativement définir une pile de requêtes par tâche, le rôle de la tâche d'ordre 1 (Task(1)) sera alors de remplir les différentes piles.

Le procédé peut, dans une alternative sélectionner les ressources sur lesquelles les services ou les clients viendront se connecter.

Toute autre combinaison est possible, sans que cela ne restreigne la portée de l'invention.

Dans la troisième étape 43, on exécute les tâches prioritaires du serveur. Plus précisément, cette étape effectue les calculs classiques interne du serveur, pour ses propres besoins, de haute priorité, ce sont en général les tâches cycliques 21.

Toutes les tâches serveurs vérifient la relation suivante :

$$P\_Server\_Task(Server\_Tasks(j)) > P\_Task(Task(i))$$

$$\forall\ (i,j) \in (1\ ..\ NT)\ x\ (1\ ..\ NB\_Server\_Tasks)$$

C'est dans cette troisième étape 43 que débute le traitement d'une MIF, ce traitement commençant par l'exécution des tâches prioritaires, en particulier des tâches cycliques 21, auxquelles est dédiée la troisième étape 43.

Dans l'alternative d'allocation dynamique du temps alloué aux clients de la première étape 41, la troisième étape 43 réalise par exemple le calcul de chaque prédictibilité estimée sur un événement à survenir, et de la charge de traitement estimée sur événement déchu.

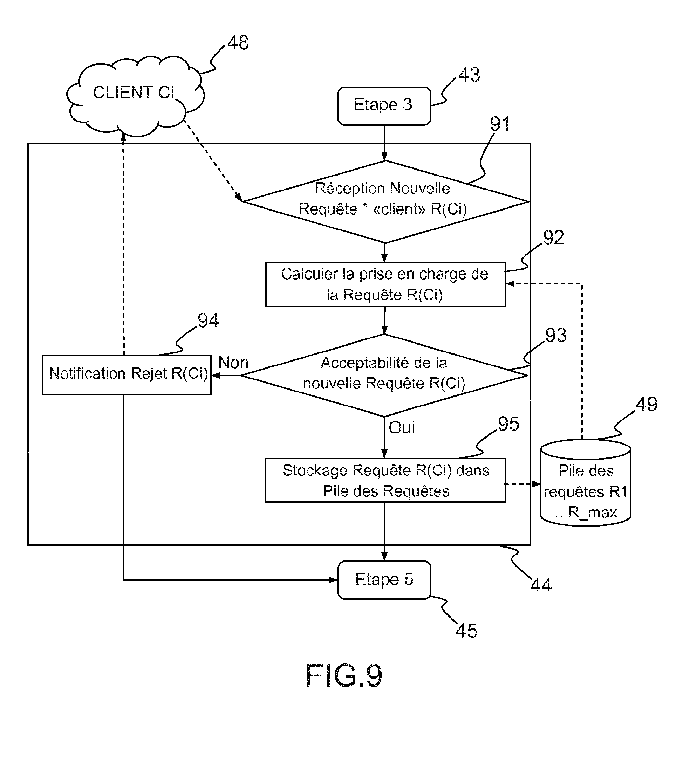

L'étape suivante, la quatrième étape 44, continue le traitement des MIF en effectuant le traitement des requêtes entrantes asynchrones émises par les clients 48. Elle comporte plusieurs sous-étapes illustrées par la figure 9.

La première sous étape 91 consiste à récupérer une nouvelle requête Ri venant d'un client Ci. Cette étape de récupération, très courte, s'exécute sur la tâche Task(1) dans une implémentation préférée. Dans une alternative, cette prise en charge pourrait se faire par le traitement cyclique 21 du serveur.

La requête est prise en charge dans l'étape suivante 92 si le système sait la gérer dans le temps imparti, c'est-à-dire si le temps de réponse nécessaire pour traiter la requête est compatible du temps de réponse minimum possible, sur la tâche Task(i) à laquelle elle a été affectée, à partir de la MIF de départ, cette prise en charge étant :

• Fonction de la MIF de démarrage du calcul de la requête Ri

• Fonction du temps alloué pour cette requête T_Task(Task(i))

• Fonction du temps alloué pour cette requête en temps restant libérable IDLE

    o Dans une implémentation Arinc 653, la tâche qui s'exécute sur l'IDLE (c'est-à-dire sur Server_Tasks(NB_Server_Tasks) est toujours celle de la priorité la plus haute qui n'a pas terminé son travail sur sa tâche ;

    o Dans une autre implémentation, le procédé pourrait couper l'IDLE en un même nombre de tâches que NT et affecter un créneau temporel à chacune des tâches clients restantes.

Si la pile des requêtes 49 est pleine, une notification de rejet avec le statut 'Pile pleine' est par exemple émise.

Dans une alternative « multi-ressources », cette tâche de répartition est par exemple exécutée sur une des ressources qui répartit les requêtes sur différentes ressources, en fonction de la charge desdites ressources. Ainsi si une ressource i est occupée à traiter des requêtes et qu'elle ne peut absorber une nouvelle requête dans sa pile sans garantie de réponse dans les temps impartis, le système de supervision s'adresse à une ressource j moins chargée, si elle existe.

La sous troisième sous-étape 93 consiste à aiguiller le résultat de la sous étape précédente 92 :

• soit vers la pile des requêtes 49 via une sous-étape suivante 95,

• soit vers une autre sous-étape 94 de notification de rejet au client 48, lorsque par exemple l'échéance demandée par ce nouveau client n'est pas compatible de la durée cumulée des traitements déjà présents et acceptés dans la pile.

Cette sous-étape 94 est un service protocolaire avec le client pour renvoyer un statut de refus de sa requête Ri et éventuellement un sous-statut indiquant par exemple un traitement trop long, une pile peine ou un autre état.

Si la requête Ri est acceptable, la sous-étape 95 envoie une demande d'écriture vers la pile de requêtes 49. Dans un mode de réalisation possible, les requêtes entrantes sont classées dans la pile en FIFO.

De préférence la pile 49 est unique, mais peut y avoir une pile par tâche dans une mise en oeuvre alternative.

Dans la sous-étape 95, il est donc écrit dans la pile :

• le service Serv(i) à exécuter pour remplir la requête Ri, au bon rang dans la pile ;

• optionnellement, le client Ci à l'origine de la requête ;

• optionnellement, le temps de traitement demandé ;

• optionnellement, la ou les ressources d'exécution choisies, dans l'alternative « multi-ressources ».

Dans l'alternative multi-ressources, la pile peut être gérée uniquement par la ressource qui supervise l'ensemble des requêtes. Avantageusement, une recopie locale de la pile sur toutes les ressources, ou une mise en commun de la pile entre les ressources peut être effectuée, pour éviter les problèmes de robustesse, dans le cas par exemple ou la ressource de supervision tombe en panne.

La cinquième étape 45 consiste à exécuter, pour chaque ressource :

- les différentes requêtes de la pile des requêtes 49 sur les différentes tâches auxquelles elles sont affectées ;
- les tâches serveurs restantes ;
- puis s'il reste du temps CPU disponible sur la tâche IDLE, après donc exécution des calculs du serveur, pour exécuter les tâches restantes selon un critère de priorité.

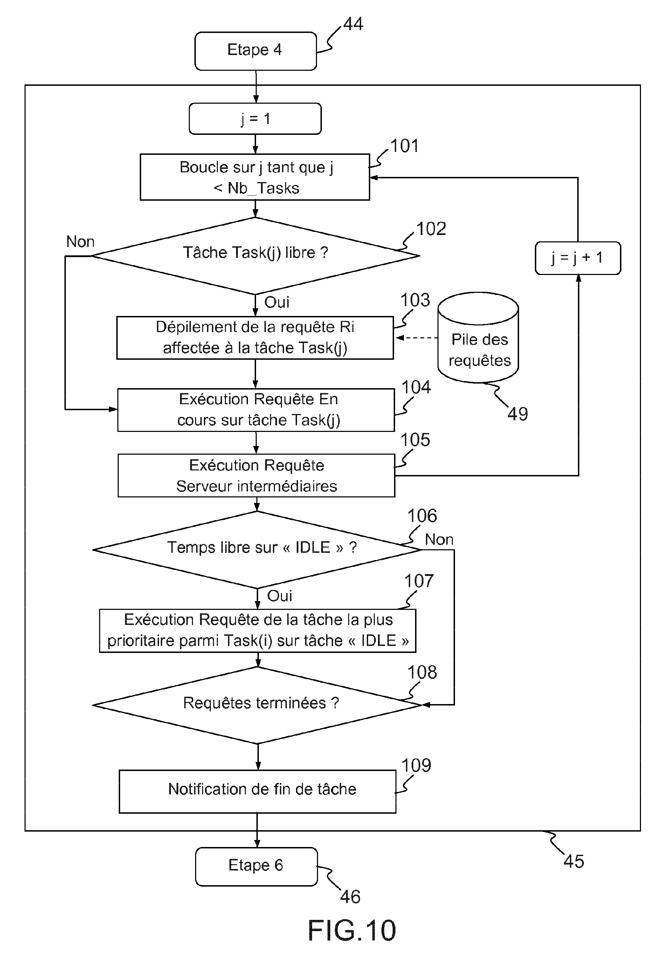

La figure 10 illustre un exemple d'exécution de la cinquième étape 45 permettant notamment de traiter les tâches intriquées entre tâches clients et tâches serveur. Dans une implémentation préférée, la tâche Task(1) est utilisée pour remplir la pile 49 dans la quatrième étape 44. Elle peut aussi être utilisée pour traiter le dépilement des tâches les plus prioritaires. pour le traitement des requêtes de la pile illustré par la figure 10, la cinquième étape 45 comporte des sous-étapes réalisées de façon itérative.

Le procédé boucle, entre la première sous-étape 101 et la cinquième sous-étape 105, sur les tâches clients. La première étape 101 prend en compte la requête d'ordre j, j variant de 1 à Nb_tasks et exprimant la profondeur de la pile, si les requêtes sont classées en FIFO.

• Dans la deuxième sous-étape 102, le procédé vérifie d'abord si la tâche d'ordre j, task (j) est libre, ou prise par l'exécution d'une requête qui avait été acceptée à un cycle antérieur, et qui n'est pas terminée ;

• Si la tâche est libre, le procédé vérifie dans la troisième sous-étape 103 s'il peut dépiler une requête à affecter sur la tâche client. Si c'est le cas, il dépile la requête Ri placée la plus prioritaire dans la pile, cette requête devient la nouvelle requête à exécuter en cours de tâche Task(j) dans la sous-étape suivante 104 ;

• Si la tâche est libre mais que rien n'est à exécuter (aucune requête à dépiler), la tâche de cette sous-étape 104 libère immédiatement la main pour laisser s'exécuter la tâche suivante par passage à la sous-étape suivante 105.

• Cette sous-étape suivante 105 consiste à vérifier si il existe des tâches asynchrones du serveur de priorité comprise entre celles de la tâche client en cours Task(j) et la prochaine Task(j+1), si c'est le cas ces tâches serveur sont exécutées. Ce processus peut s'exprimer de la façon suivante :

o Il existe i tel que

$$P\_Server\_Task(Server\_Tasks(i)) > P\_Task(Task(j+1))$$

où

$$(i,j) \in (1 .. NT - 1) \times (1 .. NB\_Server\_Tasks);$$

o On boucle 105 sur les tâches intrinsèques du serveur tant que cette équation est vérifiée ;

o Puis on reboucle à la tâche client suivante (j = j +1) en revenant à la première sous-étape 101 de la boucle d'exécution des tâches clients intriquées dans les tâches serveurs.

Lorsque toutes les tâches de la boucle d'exécution sont accomplies, on vérifie dans une sous-étape suivante 106 s'il reste du temps CPU libre sur la tâche IDLE pour exécuter les tâches clientes restantes. S'il ne reste pas de temps libre, la cinquième étape 45 est terminée 108. S'il reste du temps libre, les tâches sont exécutées selon un critère de priorité, la tâche la plus prioritaire étant exécutée en totalité ou en partie, selon la durée disponible. Lorsque le temps alloué est consommé ou l'exécution de la tâche terminée, la cinquième étape 45 est terminée. Une notification de fin de tâche est émise 109.

La sixième étape 46 gère le passage au cycle suivant (MIF suivante), un cycle étant effectué de la troisième étape 43 à la cinquième étape 45. Dans cette étape 46, si un traitement de la cinquième étape 45 pour un client externe est terminé (information transmise par la notification de fin de tâche émise (109), le système :

- Récupère les données de la requête Ri dans la pile des requêtes ;

- Notifie le client Ci correspondant avec le résultat du calcul ;

- Retire la requête des la pile des requêtes.

Ce traitement est effectué pour chacun des traitements qui ont été terminés lors de la cinquième étape 45. Il peut en effet y avoir plusieurs traitements terminés, cette information étant transmise par la notification 109.

Un cycle 43, 44, 45 correspond au traitement d'une MIF comme illustré par la figure 8. Le cycle est répété tant que les tâches Task(i) créées dans la première étape 41 ne sont pas toutes exécutées.

Le cycle 43, 44, 45 montre notamment que sur le traitement d'une MIF :

- Les tâches cycliques 21, ou tâches serveur de haute priorité, s'exécutent en premier ;

- Les tâches client Task(i) s'exécutent ensuite, pour une durée max T_Task(i), le serveur n'ayant alors pas toujours le temps de terminer la tâche client Task(i) en cours ;

- Les tâches intrinsèques du serveur sont ensuite exécutées, les tâches intrinsèques sont en général les tâches asynchrones d'un système temps réel mais peuvent être des tâches cycliques de moindre priorité que la tâche de haute priorité du serveur ;

- Et s'il reste du temps sur la MIF, c'est-à-dire que les tâches intrinsèques du serveur n'ont pas consommé toute la durée de la MIF, alors la tâche client task(i) s'exécute sur l'IDLE, c'est-à-dire sur le temps restant de la MIF.

Avantageusement, via la création d'une tâche Task(i) de priorité intermédiaire, exécutée sur une durée $T_{IdleOpt}$ déterminée préalablement sur la base des performances du système, l'invention permet :

- D'allouer du temps de calcul à des clients tiers (ou clients externes), de manière garantie ;

- De satisfaire les temps de réponse du système serveur avec une probabilité garantie de tenue des exigences ;

- De pouvoir toujours donner une réponse préalable fiable d'acceptation ou de refus de prise en charge d'une requête.

Il s'ensuit que :

- Les performances du serveur restent garanties, quelle que soit le nombre de clients existant ou à venir qui le sollicitent, puisqu'une « sur-sollicitation » est exécutée après que le serveur a terminé ses calculs intrinsèques ;
- La structuration des services permet d'assurer une compatibilité ascendante puisqu'on a utilisé une syntaxe abstraite, permettant de mettre sous forme de paramètres les données et les services du serveur.

Dans un mode de mise en oeuvre préféré, notamment dans le domaine avionique pour la gestion de vol, l'étape d'initialisation 40 et la première étape ne créent qu'une seule tâche client 31 distincte des tâches intrinsèques du serveur. La liste des tâches est alors remplacée par l'unique tâche Task(1), NT étant égal à 1 comme illustré sur la figure 3. Dans la deuxième étape 42, tous les traitements clients sont alors exécutés sur l'unique tâche Task(1) 31. Dans la première sous-étape 91 de la quatrième étape 44, les requêtes sont effectuées sur cette unique tâche Task(1) et la cinquième étape 45 s'effectue sur cette tâche Task(1). La sous étape 105 n'a plus de tri à faire puisqu'il n'y a qu'une seule tâche Task(1) : elle exécute donc en un bloc les calculs intrinsèques du serveur.
Ce mode de mise en oeuvre préféré peut avantageusement être implanté dans un système basé sur l'ARINC 653.
Il est également possible de prévoir que pour l'étape d'initialisation 40 ainsi que pour les quatre premières étapes 41, 42, 43, 44, le procédé crée une tâche par ressource, et tous les traitements sont effectués sur toutes les ressources. Il n'y a alors pas d'allocation optimisée de tâche entre ressources.
Toujours dans un mode de réalisation préféré, dans l'étape préliminaire 40, on dans la relation :

$$\bullet \quad Ttotal_{clients} = a\, T_{Idle_{Opt}} - b$$

C'est-à-dire que le temps alloués aux clients par cycle de calcul d'une MIF est égal à la durée moyenne optimisée de l'IDLE $T_{IdleOpt}$.

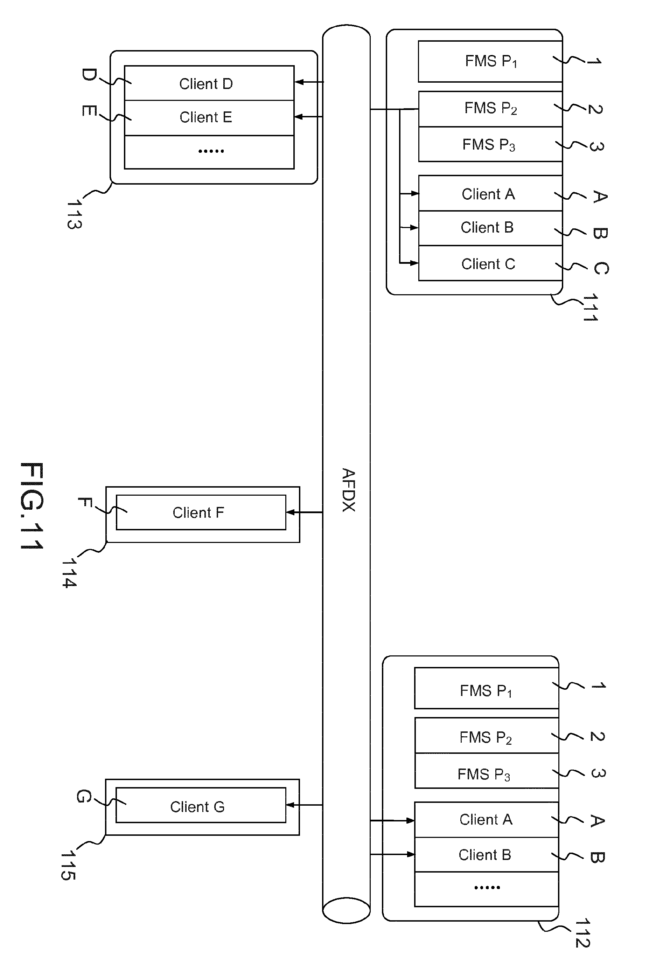

La figure 11 présente un exemple de représentation physique des clients dans le cas d'application à un système FMS, du type notamment de celui décrit dans en regard de la figure 1. Le serveur est une application de gestion de vol. Le système comporte par exemple deux modules physiques 111, 112 formant les ressources physiques comportant notamment chacun un serveur. Dans cet exemple, le serveur est une application de gestion de vol.
Le système étant redondé, les deux ressources physiques réalisent les mêmes fonctions. Les clients identifiés et connus 1, 2, 3 sont hébergés dans les modules physiques 111, 112, modules physiques du FMS. Les clients externes, non identifiés au préalable, peuvent être des applications soit hébergées dans les modules physiques 111, 112 hébergeant le serveur, soit des applications réparties dans l'avion dans d'autres modules physiques 113, 114, 115. Dans l'exemple de la figure 11, trois clients externes A, B, C sont hébergés dans le module physique 111, et 2 clients externes A et B sont hébergés dans le module physique 112. A cet effet, les clients A, B, C disposent par exemple de RAM internes aux modules comme ressources physiques, les codes applicatifs des clients A, B, C étant copiés dans les RAM internes au module auquel ils sont connectés (111 pour A,B,C et 112 pour A,B). D'autres clients externes D, E, F, G communiquent avec les modules physiques par une liaison AFDX, l'accès se faisant par les protocoles standardisés, ARINC 653, dans l'exemple de la figure 11. Les clients peuvent êtres parmi les applications suivantes :

- une IHM, une IHS intégrée, un AID
- une CMU
- un TCAS
- un TAWS
- un WIMS ou un WxR
- un EFB
- une tablette
- un FQMS
- un PA
- un FWS
- une IFE

ces applications ayant été présentées lors de la description du système FMS de la figure 1. D'autres applications clientes sont bien sûr possibles.

En référence à l'étape d'initialisation 40, les services ou fonctions FMS peuvent être abstraits comme décrit ci-après.

Trois grandes familles de services peuvent être définies pour classer l'ensemble des services d'un FMS selon la norme AEEC ARINC 702A.

- Les services de consultation de données géographiques (navigation data & dynamic magnetic variation), permettent aux clients de rechercher des informations géographiques ou de déclinaison magnétique sur un point du globe;

- Les services de consultation des performances de l'avion (aircraft characteristic & performances) faisant intervenir les fonctions de trajectoire latérale 120 et de prédiction 140 et la base de données de performances 150, cette famille étant composée de la liste suivante :

  o Les bornes caractéristiques de l'avion (ex : masses min et max, plafond d'altitude certifié ...)

  o vitesses de décollage et atterrissage (dites vitesses caractéristiques)

  o des calculs d'enveloppe de vol (vitesses max, vitesses de décrochage, roulis max ...)

  o des calculs d'intégration selon des modes avions choisis (montée de X pieds à poussée constante, descente à pente air déterminée et vitesse figée, virage à angle imposé ...)

  o calculs de forfaits (pour certains FMS, des calculs de performance simplifiés peuvent être définis dans la PERF DB, là où la précision requise est plus faible)

- les services « gestion du vol » (flight management)

  o consultation de l'état de l'avion (position, vitesse, états des systèmes connectés au FMS, comme l'état moteurs, les modes engagés au pilote automatique, etc ...

  o consultation et modification de plan de vol et de trajectoire 5D

  o consultation et modification des données d'initialisation du vol (saisie des vitesses de décollage, de l'altitude de croisière, de la météo prévue, des modes de consommation carburant...).

Prenant par exemple la famille « flight management », les services typiques sont notamment :

- Services d'administration permettant de copier tout ou partie d'un plan de vol de départ vers un plan de vol de destination, d'effacer un plan de vol, d'échanger 2 plans de vol etc ...

- Services « Initialisation » permettant d'initialiser une route et ses paramètres principaux

- Services « départ » pour saisir les procédures de départ

- Services « arrivée » pour saisir les procédures d'arrivée

- Services « airways » pour saisir la liste des « airways » (routes du ciel)

- Services « Alternate » pour saisir et vérifier les informations sur les aéroports de dégagement

- Service « DIR TO » pour effectuer un DIRECT TO vers un waypoint

- Service de saisie des contraintes verticales (altitude, vitesse, temps)

- Services « HOLD » permettant de saisir les hippodromes d'attente

- Services « Meteo » permettant de saisir les informations de vent et température pendant les différentes phases de vol

- Services de « localisation » qui permettent de connaître le positionnement de l'avion avec les différents senseurs, la précision de navigation, les balises utilisées pour la navigation, etc ...

- Services de « Résumé Route » permettant d'afficher un résumé de la Route ou de la mission.

Dans les Services de consultation de données géographiques et de performances, on peut classer trois types de services :

- Les services « Data » pour afficher les données liées à des éléments de la base de donnée de navigation : Un service pour les Routes stockées, un service pour les « points de passage », un service pour les « balises radioélectriques », un service pour les « aéroports »

- Les services « Status » qui donnent la configuration de l'avion (Part Number des logiciels et bases de données, ...). Il peut y avoir une dizaine de Services de ce type.

- Les services de « gestion de Masse » permettant de saisir et de vérifier les masses (masse à vide, carburant embarqué) et le centre de gravité.

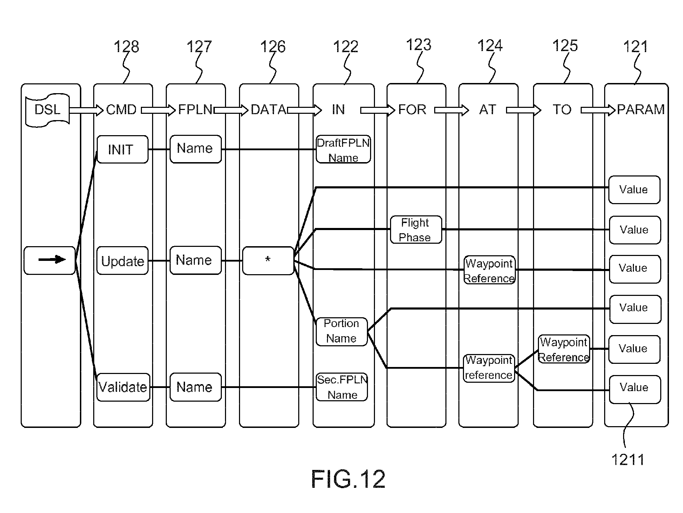

La figure 12 présente un exemple de langage appliqué aux services de la famille « fligh management ». Il comporte trois commandes de haut niveau qui permettent de rendre l'ensemble des services de la famille « flight management » unitaires.
Les paramètres PARAM 121 sont les éléments unitaires 1211 (grandeurs physiques du métier FMS) manipulées. Typiquement :

- distance entre éléments
- track (angles par rapport au nord)
- altitude
- vitesse
- carburant
- heure de passage
- vent,
- voire d'autres informations comme :

    o la qualité du signal GPS au point,
    o la température,
    o l'exigence de navigation,
    o les bornes min et max atteignables en heure,
    o les contraintes de temps/vitesse/altitude ...).

Les opérateurs IN 122, FOR 123, AT 124, TO 125 sont typiques des services « flight management » du métier FMS. Ils permettent de :

- spécifier un plan de vol de destination pour la révision, parmi les différents plans de vol gérés par le FMS (In), parmi au moins le plan de vol « actif », le plan de vol « temporaire », le plan de vol « secondaire »

- spécifier une phase particulière du vol (For), parmi au moins les phases « prévol », « décollage », « montée », « croisière », « descente », « approche »

- spécifier une révision sur un élément unitaire (leg ou waypoint) du plan de vol, via AT (la révision s'applique sur l'élément) et TO (la révision se termine sur l'élément).

L'opérateur DATA 126 est central dans le procédé. C'est la transcription des « révisions » du métier FMS, disponibles pour les clients, par une vue « donnée » (la donnée ou la structure de donnée sur laquelle va porter la commande). Pour les services « flight management », on peut définir (liste non exhaustive) les éléments de plan de vol issus de la base de donnée de navigation 130 ou créés par le pilote, tels que décrits dans l' AEEC ARINC 424 :

- Airport (aéroport)

- Runway (piste)

- Departure procédure (SID, SID ENROUTE), incluant des altitudes de décision (altitude de réduction des gaz, altitude de fin de décollage ...)

- Arrival procedure (STAR, VIA, APPROACH), incluant l'altitude de capture du faisceau ...

- Procédure de dégagement et de déroutement (Alternate)

- Cruise FL (altitude de croisière)

- Airways (autoroutes du ciel)

- Waypoints (points Lat/Long)

- Contraintes portant sur les waypoints (Altitude, vitesse, temps, Steps de croisière)

- Points créés par d'autres points (ATO, PBD, PBPB, Lat/Long)

- Overfly (contrainte de passage au dessus du point)

- Contraintes sur la trajectoire (RNAV, RNP, RVSM)

- Hippodromes d'attente et procédures de retournement sur un point

- Offset (décalage latéral ou vertical par rapport à la trajectoire)

- Plan de vol (structure complète)

- Trajectoire 2D (liste des segments de trajectoire joignant les éléments de plan de vol)

- Trajectoire 3D (trajectoire 2D + évolution en altitude

- Trajectoire 4D (trajectoire 3D + évolution en vitesse ou en temps)

- Trajectoire 5D (trajectoire 4D + fuel consonné)

- Données météo sur les points ou phases de vol.

Mais aussi les éléments de performance avion (issus de la base de données de performance 150), notamment :

- Moteurs

- Masses

- Configuration décollage (V1, V2, V3, Flaps conf, Trim ...)

- Configuration atterrissage.

L'opérateur FPLN 127 indique le plan de vol sur lequel va porter la révision parmi au moins le plan de vol « actif », le plan de vol « temporaire », le plan de vol « secondaire ».

Ainsi, avec cette structuration, trois commandes CMD 128 peuvent être définies pour encapsuler l'ensemble des services « flight management » :

- Les services INIT et VALIDATE couvrent les services d'administration du plan de vol

- Le service UPDATE couvre l'ensemble des autres services (révisions).

La structuration des services, définissant l'enchaînement des services et leurs interactions, présentée en figure 12 utilise une syntaxe abstraite 128, 127,126, 122, 123,124, 125, 121 permettant de mettre sous forme de paramètres les données et les services du serveur. Avantageusement, on obtient ainsi une interface clients standard à base de paramètres, indépendante des spécificités des services, notamment des spécificités métier, assurant par là-même une compatibilité ascendante des nouveaux services.

**Revendications**

1. Procédé d'exécution temps réel de services par une application dite « serveur » pour au moins une application dite « client », **caractérisé en ce qu'**une étape préliminaire (40) établissant une liste de services du serveur disponibles pour ledit au moins client, étape (40) dans laquelle on détermine un temps de traitement libérable du serveur pour ledit au moins client par cycle d'exécution de code appelé MIF, ledit procédé crée au démarrage :

   - (41) NT tâches client (31, Task(i)) pour ledit au moins client avec chacune un niveau de priorité d'exécution (P_task(i)) et une durée moyenne d'exécution allouée (T_task(i)), NT étant égal ou supérieur à 1, la somme des durées desdites tâches étant inférieure ou égal audit temps de traitement libérable ;
   - (42) des règles d'exécution associant chacune desdites tâches (Task(i)) à au moins un service (Serv(k)) de ladite liste ;
   puis, lors de chaque cycle MIF (43, 44, 45), ledit procédé exécute lesdits services sur leur tâches associées, une tâche étant exécutée en fonction de son niveau de priorité et pour une durée au plus égale à sa durée moyenne d'exécution allouée (T_task(i)), la partie non exécutée d'un service étant exécutée après les tâches intrinsèques du serveur.

2. Procédé selon la revendication 1, **caractérisé en ce que**, lors de chaque cycle MIF, lesdites tâches client sont exécutées (104) après les tâches du serveur de haute priorité (43) et avant les tâches intrinsèques du serveur (105).

3. Procédé selon l'une quelconque des revendications précédentes, **caractérisé en ce que** si le nombre de clients est supérieur à 1, une tâche (Task(1)) supervise les requêtes asynchrones émises par les clients et déclenche les traitements de services associés sur le serveur, soit sur cette même tâche (Task(1)), soit sur une tâche de priorité différente, en fonction du temps disponible du serveur à l'intérieur d'un cycle MIF.

4. Procédé selon l'une quelconque des revendications précédentes, **caractérisé en ce qu'**il détermine la durée maximale nécessaire pour exécuter un service du serveur pour un client sur une tâche associée, connaissant son temps moyen de traitement par cycle, ladite durée maximale étant transmise audit client.

5. Procédé selon l'une quelconque des revendications précédentes, **caractérisé en ce qu'**une durée maximale d'exécution étant imposée, l'exécution d'un service est acceptée ou refusée en fonction du temps maximal nécessaire pour terminer l'exécution dudit service et de la durée maximale d'exécution imposée.

6. Procédé selon la revendication 5, **caractérisé en ce que** la durée maximale d'exécution imposée est fournie par le client requérant ledit service.

7. Procédé selon l'une quelconque des revendications 5 ou 6, **caractérisé en ce que** ladite durée maximale d'exécution imposée est prédéterminée par configuration du serveur.

8. Procédé selon l'une quelconque des revendications précédentes, **caractérisé en ce que** la durée moyenne d'exécution allouée par cycle MIF (T_task(i)), est définie unitairement pour chaque client, quelque soit le service associé.

9. Procédé selon l'une quelconque des revendications précédentes, **caractérisé en ce qu'**une tâche (31, task(i)) est définie pour chaque service.

10. Procédé selon l'une quelconque des revendications précédentes, **caractérisé en ce qu'**une tâche (31, task(i)) est définie pour chaque client.

11. Procédé selon l'une quelconque des revendications précédentes, **caractérisé en ce que** la durée moyenne d'exécution allouée par cycle MIF est modulable en fonction des besoins propres d'exécution du serveur.

12. Procédé selon l'une quelconque des revendications précédentes, **caractérisé en ce que** la durée moyenne d'exécution allouée par cycle MIF est modulable en fonction du temps restant pour que le serveur exécute un service interne, ledit service n'étant pas sur ladite liste, et du temps de réponse attendu pour ledit service.

13. Procédé selon l'une quelconque des revendications précédentes, **caractérisé en ce que** le temps de traitement libérable est égal à :

$$a.T_{Idle\,opt} - b$$

où a est un coefficient compris entre 0 et 1 et b est une durée talon,
$T_{Idleopt}$ étant la durée moyenne du temps libre restant par cycle MIF permettant de tenir les temps de réponse des tâches intrinsèques du serveur avec une probabilité prédéfinie.

14. Procédé selon la revendication 13, **caractérisé en ce que** a = 1 et b = 0.

15. Procédé selon l'une quelconque des revendications précédentes, **caractérisé en ce que** lesdits services disponibles sont structurés à l'aide d'une syntaxe abstraite (128, 127,126, 122, 123,124, 125, 121) permettant de mettre sous forme de paramètre les données du serveur et lesdits services disponibles.

16. Système temps réel mettant en oeuvre le procédé selon l'une quelconque des revendications précédentes, comportant au moins un module physique (111) où est implanté le serveur, **caractérisé en ce que** les clients sont des applications externes implantées dans ledit module physique, lesdits clients communiquant avec le serveur via une mémoire interne au module.

17. Système selon la revendication 16, **caractérisé en ce que** les clients sont des applications externes réparties dans d'autres modules physiques (113, 114, 115) et communiquant avec le serveur via un protocole réseau.

18. Système selon l'une quelconque des revendications 16 ou 17, **caractérisé en ce que** le serveur est une application de gestion de vol.

19. Système selon la revendication 18, **caractérisé en ce que** les clients appartiennent la liste des applications suivantes :

- une IHM
- une IHS
- un AID
- une CMU
- un TCAS
- un TAWS
- un WIMS
- un WxR
- un EFB
- un FQMS
- un PA
- un FWS
- une IFE.

FIG.1

FIG.2a

FIG.2b

FIG.3

Etablissement de la liste des services et du temps alloué au clients — 40

Initialisation pile des requêtes
Création des tâches d'exécution Thigh(1)..Thigh(Nbatasks) — 41

Détermination des règles d'exécution — 42

Exécution des tâches haute priorité du « serveur » — 43

Traitement des requêtes entrantes — 44

Pile des requêtes R1 .. R_max — 49

CLIENT Ci — 48

Traitement des requêtes dans la pile et des tâches du serveur — 45

Passage au cycle de calcul suivant — 46

FIG.4

Initialisation : campagne de mesures — 51

Calcul du taux de tenue de chaque exigence — 52

Taux > seuil contractuel ? — 50

Non

Oui

Calcul de la marge temporelle (%) et détermination de Tidleopt — 53

Tidleopt : = 0

58

Création d'une tâche de priorité élevée, de durée Tidleopt — 54

Ajustement de Tidleopt — 56

Campagne de mesure avec tâche de priorité élevée saturée — 55

Calcul du taux de tenue de chaque exigence — 52

Taux = seuil contractuel ? — 60

Fin – détermination de Ttotal_clients — 57

# FIG.5

Temps T_contract(i)

Temps Tmes(i,j)

| Cyc | As1 | As2 | ······ | Asn | Cyc | As1 | As2 | ······ | Asn | ······ | Cyc | As1 | As2 | ··· | Asn | IDLE | ······ | Cyc | As1 | As2 | ··· | Asn | IDLE |

MIF 1          MIF 2                    MIF N                    MIF FIN

## FIG.6

Temps T_contract(i)

Temps Tmes(i,j)

| Cyc | T | As1 | As2 | ····· | Asn | Cyc | T | As1 | As2 | ····· | Asn | ······ | Cyc | T | As1 | As2 | ····· | Asn | ······ | Cyc | T | As1 | As2 | ····· | Asn |

MIF 1          MIF 2                    MIF N                    MIF FIN

## FIG.8

FIG.7

FIG.9

Etape 4 — 44

j = 1

Boucle sur j tant que j — 101
< Nb_Tasks

Tâche Task(j) libre ? — 102

Non

Oui

Dépilement de la requête Ri — 103
affectée à la tâche Task(j)

Pile des
requêtes — 49

j = j + 1

Exécution Requête En — 104
cours sur tâche Task(j)

Exécution Requête — 105
Serveur intermédiaires

Temps libre sur « IDLE » ? — 106

Non

Oui

Exécution Requête de la tâche la plus — 107
prioritaire parmi Task(i) sur tâche « IDLE »

Requêtes terminées ? — 108

Notification de fin de tâche — 109

Etape 6 — 45

46

FIG.10

FIG.11

FIG.12

Europäisches Patentamt
European Patent Office
Office européen des brevets

Numéro de la demande
EP 15 24 8011

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/079486 A1 (BRANDT SCOTT A [US] ET AL) 29 mars 2012 (2012-03-29) * alinéas [0032], [0033], [0047], [0051] - [0057]; figures 1, 2 * | 1-19 | INV. G06F9/48 |
| A | US 2002/120663 A1 (BINNS PAMELA A [US]) 29 août 2002 (2002-08-29) * le document en entier * | 1-19 | |
| A | ABDELZAHER T F ET AL: "QoS negotiation in real-time systems and its application to automated flight control", REAL-TIME TECHNOLOGY AND APPLICATIONS SYMPOSIUM, 1997. PROCEEDINGS., T HIRD IEEE MONTREAL, QUE., CANADA 9-11 JUNE 1997, LOS ALAMITOS, CA, USA,IEEE COMPUT. SOC, US, 9 juin 1997 (1997-06-09), pages 228-238, XP010232482, DOI: 10.1109/RTTAS.1997.601361 ISBN: 978-0-8186-8016-8 * le document en entier * | 1,16 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| La Haye | 8 octobre 2015 | Michel, Thierry |

**EP 2 945 062 A1**

**ANNEXE AU RAPPORT DE RECHERCHE EUROPEENNE
RELATIF A LA DEMANDE DE BREVET EUROPEEN NO.**

EP 15 24 8011

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-10-2015

| Document brevet cité au rapport de recherche | Date de publication | Membre(s) de la famille de brevet(s) | Date de publication |
|---|---|---|---|
| US 2012079486 A1 | 29-03-2012 | US 2012079486 A1<br>US 2013283279 A1 | 29-03-2012<br>24-10-2013 |
| US 2002120663 A1 | 29-08-2002 | AUCUN | |

EPO FORM P0460